# EUROPÄISCHE PATENTSCHRIFT

(11) **EP 3 485 077 B1**
(45) Veröffentlichungstag und Bekanntmachung des Hinweises auf die Patenterteilung: **26.10.2022**
(21) Anmeldenummer: 17737577.1
(22) Anmeldetag: 11.07.2017
(51) Int. Cl.: D06F 33/37, D06F 103/00, D06F 103/22, D06F 105/00, D06F 105/58, D06F 39/02, D06F 103/18, D06F 105/42

(54) **VERFAHREN UND VORRICHTUNG ZUR VORRATSÜBERWACHUNG**
METHOD AND DEVICE FOR SUPPLY MONITORING
PROCÉDÉ ET DISPOSITIF DE SURVEILLANCE DE RÉSERVE

(30) Priorität: 15.07.2016 DE 102016212981
(43) Veröffentlichungstag der Anmeldung: 22.05.2019
(73) Patentinhaber: Henkel AG & Co. KGaA, 40589 Düsseldorf (DE)
(72) Erfinder: KESSLER, Arnd, 40789 Monheim am Rhein (DE); NITSCH, Christian, 40591 Düsseldorf (DE); ZÜCHNER, Lars, 40764 Langenfeld (DE); WAWER, Georg, 1040 Wien (AT); MÜLLER, Alexander, 40789 Monheim (DE)
(86) Internationale Anmeldenummer: PCT/EP2017/067346
(87) Internationale Veröffentlichungsnummer: WO 2018/011179

(56) Entgegenhaltungen:
- WO-A1-2015/187545
- WO-A2-01/96645
- US-B1- 7 754 025

## Beschreibung

### Gebiet der Erfindung

Die Erfindung betrifft Verfahren und Vorrichtungen, welche insbesondere das Nachbestellen von Reinigungsmitteln unterstützen können und etwa beim automatisierten Nachbestellen von Reinigungsmitteln verwendet werden können.

### Hintergrund der Erfindung

Reinigungsmittel werden beispielsweise im Haushalt für die Reinigung unterschiedlicher Objekte oder zur Unterstützung oder Ergänzung des Reinigungsvorgangs eingesetzt. Beispielsweise wird für Waschmaschinen ein Reinigungsmittel, zum Beispiel ein Waschmittel, für die Reinigung von Textilien eingesetzt.

Bei der Benutzung derartiger automatischer Haushaltswaschmaschinen für Textilien erfolgt die Dosierung des Waschmittels in der Regel aus einem Vorratsbehälter. Das Waschmittel wird dabei in der Regel über eine Einspüleinrichtung in die Waschmaschine eingefüllt. Alternativ kann das Waschmittel auch mittels einer Dosierhilfe eingefüllt werden oder auch direkt in die Wäschetrommel zu der Wäsche gegeben werden. In jeden Fall wird beim Einfüllen durch den Benutzer dabei gleichzeitig die Dosierung festgelegt. Dabei wird in der Regel das Waschmittel vor Beginn des Waschprozesses, also bevor Wasser durch die Einspüleinrichtung strömt, dosiert.

Das Waschmittel wird dabei in dem Vorratsbehälter gelagert. Der Benutzer muss dabei in der Regel manuell den Vorrat in dem Vorratsbehälter beobachten und gegebenenfalls bei einem aufgebrauchten Vorrat das entsprechende Waschmittel erneut erwerben.

Aus der EP 2 784 205 A1 ist es bekannt, das Waschmittel nicht manuell einzufüllen, sondern einen Vorratsbehälter in eine Aufnahmeeinrichtung am Haushaltsgerät einzusetzen und mit dem Haushaltsgerät zu koppeln. Dies kann zwar die Dosierung vereinfachen und beispielsweise eine Über- oder Unterdosierung vermeiden.

Allerdings kann es in jedem der Fälle passieren, dass der Benutzer erst bei der gewünschten Verwendung des Waschmittels feststellt, dass dieses aufgebraucht oder nahezu aufgebraucht ist, sodass es nicht wie geplant verwendet werden kann.

Weiterhin ist problematisch, dass unter Umständen mehrere Waschmittel vorhanden sind. So sind beispielsweise häufig ein Vollwaschmittel, ein Color-Waschmittel, eine Bleichmittel, ein Waschmittel für schwarze Wäsche und/oder ein Weichspüler vorrätig. Somit kann es allein schwierig sein, einen entsprechenden Überblick zu behalten. Zudem muss der Benutzer sich präzise merken, welche Art von Waschmittel aufgebraucht ist, sodass auch das richtige Waschmittel erneut erworben wird.

Um dieser Problematik zu begegnen, ist es aus dem Stand der Technik der WO 01/96645 A2 bekannt, einen Vorratsbehälter für ein Waschmittel mit einem Füllstandsensor oder Gewichtssensor zu versehen, um den aktuellen Bestand des Waschmittels in dem Vorratsbehälter zu überwachen. Dabei ist vorgesehen, dass ein Bestandsmodul elektronisch einen Ersatz an Waschmittel bestellen kann, wenn der Füllstand des Waschmittels einen vorbestimmten Füllstand in dem Vorratsbehälter erreicht. Das heißt, dass im Stand der Technik der Waschmittelvorrat direkt durch eine Füllstandmessung erfolgt und bei einem zuvor definierten, absoluten Füllstand eine Nachbestellung ausgelöst werden kann.

Sensoren zur Ermittlung von Füllständen von Behältern sind an sich in unterschiedlichen Varianten für unterschiedlichen Güter bekannt, so beispielsweise aus der WO 2015/076952, der EP 2 718 679, der EP 2 282 184, oder der WO 2015/187545.

Das Dokument US7754025 B1 beschreibt eine Geschirrspülmaschine mit einem Indikator, der eine Restmenge an Reinigungsmittel anzeigt. Die Geschirrspülmaschine umfasst ferner Mittel zur Vorhersage einer Erschöpfung des verbleibenden Reinigungsmittels.

Benötigt der Benutzer aber beispielsweise eine höhere Dosierung als durch den restlichen Füllstand ermöglicht wird oder nutzt der Benutzer häufig das Reinigungsmittel, kann eine Lieferung trotz Nachbestellung unter Umständen nicht ausreichend sein oder nicht rechtzeitig erfolgen und somit vom Benutzer als unzuverlässig angesehen werden.

### Allgemeine Beschreibung einiger beispielhafter Ausführungsformen der Erfindung

Vor dem Hintergrund des dargestellten Stands der Technik ist es somit Aufgabe der Erfindung, die beschriebenen Probleme zumindest teilweise zu verringern oder zu vermeiden, das heißt insbesondere dem Benutzer eine einfache und verlässliche Nachbestellung von Reinigungsmittel bereitzustellen.

Gemäße einem ersten Aspekt der Erfindung wird ein Verfahren beschrieben, durchgeführt von zumindest einer Vorrichtung, das Verfahren umfassend ein Prüfen, ob ein Aufbrauchen eines Vorrats eines Reinigungsmittels zu erwarten ist, wobei das Prüfen zumindest teilweise auf einer Quantitätsinformation repräsentativ für eine Menge des Reinigungsmittels des Vorrats eines Benutzers und auf einer Verbrauchsinformation indikativ für ein zu erwartendes Verbrauchsverhalten des Benutzers in Bezug auf das Reinigungsmittel basiert.

Ein Reinigungsmittel kann beispielsweise für die Körperhygiene, für Wäsche und Textilien, für Geschirr, für Oberflächen oder für sonstige Objekte wie Sanitäreinrichtungen oder Rohre gedacht sein. Dementsprechend kann ein Reinigungsmittel beispielsweise eine Seife, ein Shampoo, ein Duschgel, eine Flüssigseife, ein Waschmittel (etwa ein Vollwaschmittel oder ein Colorwaschmittel), ein Weichspüler, ein Geschirrspülmittel, ein Maschinengeschirrspülmittel, ein Klarspüler, ein Neutralreiniger, ein Scheuermittel, ein Fensterreinigungsmittel, ein Entkalker, ein Kalkreiniger, ein Rohrreiniger, ein Alkoholreiniger, ein Allzweckreiniger, ein Glasreiniger, ein Sanitärreiniger, ein WC-Reiniger oder ein Teppichreiniger sein.

Das heißt, unter einem Reinigungsmittel kann nicht nur das die eigentliche Reinigung bewirkende Mittel sondern ebenfalls auch Reinigungshilfsmittel oder Reinigungszusatzmittel, wie beispielsweise ein Bleichzusatzmittel, ein Weichspüler oder Wäschestärke, verstanden werden. Ein Reinigungsmittel kann zudem eine Flüssigkeit, ein disperses System, zum Beispiel ein Gel oder Schaum, oder ein Feststoff, insbesondere ein Tab, Pulver oder Granulat, sein.

Ein Reinigungsmittel kann beispielsweise eine oder mehrere Komponenten aus der Gruppe von Komponenten umfassend Tenside, Alkalien, Builder, Vergrauungsinhibatoren, optische Aufheller, Enzyme, Bleichmittel, Soil-Release-Polymere, Füller, Weichmacher, Duftstoffe, Farbstoffe, Pflegestoffe, Säuren, Stärke, Isomalt, Zucker, Zellulose, Zellulosederivate, Carboxymethylcellulose, Polyetherimid, Silikonderivate und/oder Polymethylimine aufweisen.

Ein Reinigungsmittel kann ferner einen oder mehrere weitere Bestandteile umfassen. Diese Bestandteile schließen ein, sind aber nicht beschränkt auf die Gruppe bestehend aus Bleichaktivatoren, Komplexbildnern, Gerüststoffen, Elektrolyten, nichtwässrigen Lösungsmitteln, pH-Stellmitteln, Parfümträgern, Fluoreszenzmitteln, Hydrotropen, Silikonölen, Bentoniten, Antiredepositionsmitteln, Einlaufverhinderern, Knitterschutzmitteln, Farbübertragungsinhibitoren, , antimikrobiellen Wirkstoffen, Germiziden, Fungiziden, Antioxidantien, Konservierungsmitteln, Korrosionsinhibitoren, Antistatika, Bittermitteln, Bügelhilfsmitteln, Phobier- oder Imprägniermitteln, Quell- oder Schiebefestmitteln und/oder UV-Absorbern.

Unter einem Vorrat eines Reinigungsmittels wird beispielsweise der Vorrat eines Vorratsbehälters verstanden. Ein Vorratsbehälter kann dabei wiederverschließbar ausgestaltet sein. Ein Vorratsbehälter kann eine Einmalverpackung oder ein wiederauffüllbarer Behälter sein. Beispielsweise ist ein Vorratsbehälter zur Aufnahme eines festen und/oder flüssigen Waschmittels ausgebildet. Beispielsweise ist ein Vorratsbehälter als Kiste, Karton, Kartonage, Beutel, Tüte, Flasche oder Kartusche ausgebildet. Beispielsweise besteht ein Vorratsbehälter (zumindest teilweise) aus Karton, Papier, Kunststoff und/oder Folie. Ein Vorrat reicht in der Regel für ein mehrmaliges Dosieren. Beispielsweise können mehrere Reinigungsvorgänge (beispielsweise Waschgänge) mittels eines Vorrats eines Vorratsbehälters durchgeführt werden.

Das Reinigungsmittel ist beispielsweise für eine Reinigungsvorrichtung vorgesehen. Eine Reinigungsvorrichtung ist beispielsweise eine Waschmaschine oder eine Spülmaschine. Eine Waschmaschine kann insbesondere eine automatische Haushaltswaschmaschine für Textilien sein.

Die Wachmaschine kann in verschiedenen Ausgestaltungsformen vorliegen. Man unterscheidet Toplader, bei denen die Ladeluke an der Oberseite liegt, und Frontlader, bei denen ein Bullauge als Ladeluke an der Vorderseite dient. Vorteil des Topladers ist, dass die Abdichtung der Tür einfacher ausgeführt und die Trommel auf zwei Seiten durch Wälzlager abgestützt sein kann, ein Toplader lässt sich auch in sehr engen Räumen aufstellen, wo nicht genügend Platz zum Öffnen einer vorderen Tür zur Verfügung steht. Ein Frontlader hingegen bietet auf der Oberseite Platz für z. B. einen Wäschetrockner oder für eine Arbeitsfläche und wird deswegen gelegentlich anstelle eines Unterschranks in eine Küchenzeile eingebaut. Toplader sind nachteilig, da sie mehr Wasservolumen für die Wäschereinigung als Frontlader benötigen.

Die amerikanischen Toplader haben immer eine rotierende Trommel und Mischelemente (Agitator oder Discs), wobei sich die Mischelemente mit oder gegen die Trommeldrehrichtung bewegen können. Die Maschinen können eine Laugenumwälzung und Sprühvorrichtungen für die Lauge aufweisen. Grundsätzlich werden Deep Fill und HE-Toploader unterschieden. Deep Fill Toplader arbeiten mit vorgegebenen Wasserniveaus, haben also keine Beladungserkennung. HE Maschinen verfügen in der Regel über eine Beladungserkennung und steuern danach die Wassermengen. In der Regel haben die Maschinen keine eingebaute Heizung, sondern werden an Warmwasser angeschlossen.

Dabei ist der Vorrat beispielsweise in einem von der Reinigungsvorrichtung separaten Vorratsbehälter gelagert. Das Dosieren des Reinigungsmittels erfolgt in diesem Fall manuell durch den Benutzer. Beispielsweise kann hierzu eine Dosierhilfe vorgesehen sein. Alternativ ist ebenfalls denkbar, dass der Vorrat in einem in die Reinigungsvorrichtung integrierten oder integrierbaren Vorratsbehälter, beispielsweise in einer Kartusche, welche insbesondere zum automatischen Dosieren vorgesehen und/oder eingerichtet ist, gelagert ist.

Unter einem Benutzer wird grundsätzlich eine Person oder auch ein Personenkreis verstanden, welcher beispielsweise Zugriff auf den Vorrat des Reinigungsmittels hat. Insofern kann unter Benutzer eine einzelne Person wie auch eine Mehrzahl an Personen verstanden werden.

Unter einem Aufbrauchen eines Vorrats eines Reinigungsmittels wird beispielsweise ein Leeren des Vorratsbehälters verstanden, beispielsweise ein vollständiges Leeren oder ein Leeren insoweit, dass kein weiterer Reinigungsvorgang mehr mit dem verbleibenden Vorrat möglich ist.

Ein Prüfen, ob ein Aufbrauchen eines Vorrats des Reinigungsmittels zu erwarten ist, kann insbesondere ein Abschätzen oder ein Prognostizieren eines Verbrauchsverhaltens umfassen. Beispielsweise kann zu erwarten sein, dass ein Aufbrauchen eines Vorrats des Reinigungsmittels zu erwarten ist, wenn ermittelt wird, dass der Vorrat des Reinigungsmittels in nicht mehr oder in weniger als einer vorbestimmten Zeit aufgebraucht sein wird. Beispielsweise kann zu erwarten sein, dass ein Aufbrauchen eines Vorrats des Reinigungsmittels zu erwarten ist, wenn ermittelt wird, dass der Vorrat des Reinigungsmittels (in einer vorbestimmten Zeit) unter einen Schwellwert sinkt oder bereits gesunken ist.

Das Prüfen basiert dabei auf einer Quantitätsinformation. Eine Quantitätsinformation, welche repräsentativ für die Menge eines Reinigungsmittels ist, kann beispielsweise eine Information sein, aus der die aktuelle Menge des Reinigungsmittels, gegebenenfalls unter Hinzunahme weiterer Informationen, ableitbar ist. Beispielsweise gibt die Quantitätsinformation die aktuelle Menge des Reinigungsmittels des Vorrats an. Derartige weitere Informationen sind beispielsweise ein Umrechnungsfaktor oder andere vorbekannte Informationen, wie beispielsweise Informationen über eine Eigenschaft des Vorratsbehälters, wie beispielsweise dessen Größe, Volumen oder Geometrie. Ebenfalls kann die Quantitätsinformation bereits unmittelbar die Menge des Reinigungsmittels in einer entsprechenden Einheit (beispielsweise einer Volumeneinheit, wie Liter oder Kubikzentimeter, oder einer Gewichtseinheit wie Gramm) angeben. Beispielsweise ist die Quantitätsinformation als ein Datum oder Daten, beispielsweise eines Datensatzes, gespeichert.

Das Prüfen basiert darüber hinaus auch auf einer Verbrauchsinformation. Eine Verbrauchsinformation, welche indikativ für ein zu erwartendes Verbrauchsverhalten des Benutzers in Bezug auf das Reinigungsmittel ist, erlaubt somit insbesondere ein Prognostizieren oder ein Abschätzen eines Verbrauchsverhaltens des Benutzers. Im Unterschied zum Stand der Technik wird somit nicht lediglich auf Basis einer Quantitätsinformation (beispielsweise eines absoluten Füllstandes) ein Prüfen durchgeführt, sondern zusätzlich auch auf einer Information, welche beispielsweise die Geschwindigkeit oder die Rate, mit der das Reinigungsmittel verbraucht wird.

Da die Verbrauchsinformation von Benutzer zu Benutzer oder von Benutzergruppe zu Benutzergruppe unterschiedlich sein kann, erlaubt ein Prüfen auf Basis der Quantitätsinformation und der Verbrauchsinformation ein individualisiertes und damit präziseres Prüfen, ob ein Aufbrauchen des Vorrats des Reinigungsmittels zu erwarten ist. Im Ergebnis kann ein voraussichtlicher Leerstand gezielter ermittelt und ein optimaler Beschaffungszeitpunkt zum Nachbestellen eines Vorrats des Reinigungsmittels bestimmt werden.

Beispielsweise kann eine Verbrauchsinformation eine Information sein, welche angibt, welche Menge des Reinigungsmittels in welcher Zeit oder welchem Zeitraum verbraucht wird. Beispielsweise kann eine Verbrauchsinformation angeben, welche Menge des Reinigungsmittels pro Anwendung (das heißt beispielsweise pro Waschgang im Falle eines Wasch- oder Waschhilfsmittels) verbraucht wird. Ein weiteres Beispiel einer Verbrauchsinformation kann in der Information gesehen werden, in welche Verbrauchskategorie (beispielsweise "hoher Verbrauch", "mittlerer Verbrauch" oder "niedriger Verbrauch") der Benutzer fällt.

Beispielsweise ist eine Verbrauchsinformation reinigungsmittelspezifisch. Mit andern Worten werden beispielsweise für unterschiedliche Reinigungsmittel unterschiedliche Verbrauchsinformationen verwendet, auch wenn es sich beispielsweise um denselben Benutzer handelt. Beispielsweise ist eine Verbrauchsinformation benutzerspezifisch. Mit anderen Worten werden beispielsweise für unterschiedliche Benutzer unterschiedliche Verbrauchsinformationen verwendet, auch wenn es sich beispielsweise um das gleiche Reinigungsmittel handelt.

Die eine oder mehreren Vorrichtungen umfassen beispielsweise eine oder mehrere Datenverarbeitungsanlagen, die softwaremäßig und/oder hardwaremäßig eingerichtet sind, um die jeweiligen Schritte eines beispielhaften Verfahrens gemäß dem ersten Aspekt ausführen zu können. Beispiele für eine Datenverarbeitungsanlage sind ein Computer, ein Desktop-Computer, ein Server, ein Thinclient und/oder ein tragbarer Computer (Mobilgerät), wie etwa ein Laptop-Computer, ein Tablet-Computer, ein Wearable, ein persönlicher digitaler Assistent oder ein Smartphone.

Gemäß des erfindungsgemäßen Verfahrens gemäß dem ersten Aspekt umfasst das Verfahren weiterhin ein Erhalten der Quantitätsinformation repräsentativ für eine Menge des Reinigungsmittels des Vorrats oder einer Information, aus der die Quantitätsinformation ableitbar ist.

Eine Information, aus der die Quantitätsinformation ableitbar ist, ist beispielsweise eine Information repräsentativ für eine entnommene Menge aus dem Vorrat. Ist die bisherige Menge des Reinigungsmittels des Vorrats bekannt, kann aus der entnommenen Menge auf die noch verbleibende Menge des Reinigungsmittels des Vorrats rückgeschlossen werden.

Die Quantitätsinformation oder die Information, aus der die Quantitätsinformation ableitbar ist, wird beispielsweise an einer Vorrichtung, welche ein beispielhaftes Verfahren gemäß dem ersten Aspekt durchführt, erhalten. Beispielsweise wird die entsprechende Information empfangen, beispielsweise über eine drahtlose oder eine drahtgebundene Verbindung. Beispielsweise weist die Vorrichtung hierzu eine Kommunikationsschnittstelle eingerichtet für eine drahtgebundene oder drahtlose Kommunikation auf. Beispielsweise ist die Kommunikationsschnittstelle eine Netzwerkschnittstelle. Die Kommunikationsschnittstelle ist bevorzugt dazu eingerichtet mit einem Kommunikationssystem zu kommunizieren. Beispiele für ein Kommunikationssystem sind ein lokales Netzwerk (LAN), ein großräumiges Netzwerk (WAN), ein drahtloses Netzwerk (beispielsweise gemäß dem IEEE-802.11-Standard, dem Bluetooth (LE)-Standard und/oder dem NFC-Standard), ein drahtgebundenes Netzwerk, ein Mobilfunknetzwerk, ein Telefonnetzwerk und/oder das Internet.

Gemäß einer bevorzugten Ausgestaltung des Verfahrens gemäß dem ersten Aspekt ist die Quantitätsinformation repräsentativ für einen relativen oder absoluten Füllstand des Reinigungsmittels des Vorrats.

Ein absoluter Füllstand des Reinigungsmittels des Vorrats gibt beispielsweise eine absolute Menge des Reinigungsmittels, beispielsweise in einer Volumen oder Gewichtseinheit an. Die Menge ist also insbesondere unabhängig von dem ursprünglichen Vorrat. Ein relativer Füllstand des Reinigungsmittels gibt beispielsweise einen Anteil des noch vorhandenen Reinigungsmittels im Verhältnis zum ursprünglich Vorrat an, beispielsweise ein prozentualer Anteil.

Gemäß einer bevorzugten Ausgestaltung des Verfahrens gemäß dem ersten Aspekt umfasst das Verfahren weiterhin ein Assoziieren der Quantitätsinformation repräsentativ für eine Menge des Reinigungsmittels des Vorrats mit einer Zeitinformation repräsentativ für eine Zeit, zu der der Vorrat die Menge des Reinigungsmittels aufweist.

Beispielsweise sind die Quantitätsinformation und die Zeitinformation einander zuordenbar. Beispielsweise werden die Quantitätsinformation und die Zeitinformation in einem Datensatz einer Datenbank gespeichert. Beispielsweise ist die Zeitinformation ein (digitaler) Zeitstempel. Wie bereits ausgeführt ist die Quantitätsinformation repräsentativ für eine Menge des Reinigungsmittels des Vorrats beispielsweise repräsentativ für einen absoluten oder relativen Füllstand des Reinigungsmittels des Vorrats. Beispielsweis umfasst die Datenbank mehrere Quantitätsinformationen und Zeitinformationen, wobei jede Quantitätsinformation mit einer zugehörigen Zeitinformation assoziiert ist.

Gemäß einer bevorzugten Ausgestaltung des Verfahrens gemäß dem ersten Aspekt umfasst das Verfahren weiterhin ein Ermitteln der Verbrauchsinformation indikativ für ein zu erwartendes Verbrauchsverhalten.

Das Ermitteln der Verbrauchsinformation kann beispielsweise auf prädiktiver Analytik ("predictive analytics") basieren. Hierzu werden beispielsweise statistische Techniken, wie das maschinelle Lernen oder Data Mining, verwendet, wobei aktuelle und/oder historische Daten analysiert werden, um Vorhersagen über zukünftige Ereignisse, in diesem Fall das zu erwartende Verbrauchsverhalten, zu machen.

Unter einem maschinellen Lernen wird verstanden, dass ein künstliches System (zum Beispiel eine Vorrichtung gemäß dem zweiten Aspekt oder ein System gemäß dem dritten Aspekt) aus Beispielen lernt und diese nach Beendigung der Lernphase verallgemeinern kann. Das heißt, es werden nicht einfach die Beispiele auswendig gelernt, sondern es werden Muster und Gesetzmäßigkeiten in den Lerndaten erkannt. Hierzu können unterschiedliche Ansätze verfolgt werden. Beispielsweise kann ein überwachtes Lernen, ein teilüberwachtes Lernen, ein unüberwachtes Lernen, ein bestärktes Lernen und/oder ein Aktives Lernen eingesetzt werden. Ein überwachtes Lernen kann beispielsweise mittels eines künstlichen neuronalen Netzes (etwa einem rekurrenten neuronalen Netz) oder mittels einer Support Vector Machine erfolgen. Auch ein unüberwachtes Lernen kann beispielsweise mittels eines künstlichen neuronales Netzes (beispielsweis eines Autoencoders) erfolgen. Als Lerndaten dienen dann beispielsweise insbesondere die mehrmalig erhaltenen und/oder ermittelten Quantitätsinformationen und/oder Qualitätsinformationen.

Gemäß einer bevorzugten Ausgestaltung des Verfahrens gemäß dem ersten Aspekt basiert das Ermitteln der Verbrauchsinformation indikativ für ein zu erwartendes Verbrauchsverhalten zumindest teilweise auf einer oder mehreren erhaltenen Quantitätsinformationen jeweils repräsentativ für eine Menge des Reinigungsmittels des Vorrats.

Alternativ oder zusätzlich ist denkbar, dass die erhaltenen und/oder ermittelten Quantitätsinformationen und/oder Qualitätsinformationen mit weiteren Informationen assoziiert werden, beispielsweise mit der Anzahl und/oder des jeweiligen Alters der Personen eines Haushalts zur Erstellung eines persönlichen Verbrauchsprofils oder beispielsweise mit der Jahreszeit zur Erstellung eines jahreszeitlichen Verbrauchsprofils.

Durch diese Maßnahmen kann die Zuverlässigkeit eines Prüfens, ob ein Aufbrauchen eines Vorrats des Reinigungsmittels zu erwarten ist, erhöht werden.

Die einer oder mehreren erhaltenen Quantitätsinformationen sind beispielsweise solche desselben oder unterschiedlicher Benutzer. Beispielsweise werden erhaltene Quantitätsinformationen, welche jeweils repräsentativ für eine Menge des Reinigungsmittels des Vorrats sind, gespeichert, beispielsweise in einer Datenbank. Die erhaltenen Quantitätsinformationen können als Basis für ein Ermitteln der Verbrauchsinformation dienen. Aus den erhaltenen Quantitätsinformationen können insbesondere in Zusammenhang mit zugehörigen Zeitinformationen ein zeitlicher Verlauf des Reinigungsmittelverbrauchs abgeleitet werden. Dieser kann als Basis für das zu erwartende Verbrauchsverhalten dienen. Beispielsweise wird davon ausgegangen, dass ein Benutzer ein Verbrauchsverhalten aus der Vergangenheit fortsetzt.

Gemäß einer bevorzugten Ausgestaltung des Verfahrens gemäß dem ersten Aspekt berücksichtigt die Verbrauchsinformation zumindest teilweise ein bisheriges Verbrauchsverhalten des Benutzers oder anderer Benutzer in Bezug auf das Reinigungsmittel.

Aus dem bisherigen Verbrauchsverhalten des Benutzers in Bezug auf das Reinigungsmittel kann ein zu erwartendes Verbrauchsverhalten desselben Benutzers ermittelt werden. Ebenfalls ist denkbar, dass die Verbrauchsinformation ein bisheriges Verbrauchsverhalten des Benutzers in Bezug auf ein anderes Reinigungsmittel berücksichtigt. Beispielsweise kann aus einem hohen oder niedrigen Verbrauch eines Waschmittels auch auf einen entsprechend hohen oder niedrigen Verbrauch eines Weichspülers bei demselben Benutzer geschlossen werden (und andersherum).

Ebenfalls vorteilhaft kann jedoch alternativ oder zusätzlich die Verbrauchsinformation zumindest teilweise ein bisheriges Verbrauchsverhalten anderer Benutzer in Bezug auf das Reinigungsmittel berücksichtigen. Beispielsweise kann aus einem hohen oder niedrigen Verbrauch anderer Benutzer des gleichen Reinigungsmittels auf einen entsprechend hohen oder niedrigen Verbrauch durch andere Benutzer geschlossen werden.

Beispielsweise berücksichtigt die Verbrauchsinformation saisonale Unterschiede im Verbrauch. Es hat sich gezeigt, dass je nach Saison unterschiedliche Arten und/oder Mengen eines Reinigungsmittels verwendet werden. Die saisonalen Unterschiede können beispielsweise ebenfalls dadurch berücksichtigt werden, dass bisherige Verbrauchsinformationen desselben oder anderer Benutzer berücksichtigt werden.

Gemäß einer bevorzugten Ausgestaltung des Verfahrens gemäß dem ersten Aspekt berücksichtigt die Verbrauchsinformation zumindest teilweise einen bisherigen zeitlichen Verlauf eines Verbrauchs des Reinigungsmittels, insbesondere eine bisherige Dosiermenge und/oder eine bisherige Nutzungsfrequenz des Reinigungsmittels.

Ein bisheriger zeitlicher Verlauf des Verbrauchs kann beispielsweise verwendet werden, um, beispielsweise mittels einer Extrapolation, einen zukünftigen zeitlichen Verlauf zu ermitteln. Bei einer hohen Nutzungsfrequenz und/oder einer hohe Dosiermenge kann beispielsweise erwartet werden, dass ein Aufbrauchen des Vorrats schneller erfolgt als bei einer niedrigen Nutzungsfrequenz und/oder Dosiermenge.

Gemäß des erfindungsgemäßen Verfahrens gemäß dem ersten Aspekt umfasst das Verfahren weiterhin ein Bestellen oder Auslösen eines Bestellens eines Vorrats des Reinigungsmittels, falls das Prüfen ergibt, dass ein Aufbrauchen eines Vorrats des Reinigungsmittels zu erwarten ist.

Das Verfahren kann somit insbesondere als ein Verfahren zum automatisierten Nachbestellen eines Reinigungsmittels angesehen werden. Beispielsweise umfasst das Bestellen oder dessen Auslösen ein Senden von Informationen, welche ein Produkt eindeutig identifizieren, beispielsweise eine Artikelnummer, eine Produktkennzeichnung, ein Produktname und/oder eine Mengenangabe. Der Benutzer muss sich dann weder um ein Überwachen des Vorrats kümmern, noch muss er sich um ein Nachbestellen des Reinigungsmittels zum Auffüllen des Vorrats kümmern.

Gemäß einer bevorzugten Ausgestaltung des Verfahrens gemäß dem ersten Aspekt umfasst das Verfahren weiterhin ein Ausgeben oder Auslösen eines Ausgebens eines Hinweises an einen Benutzer, dass ein Aufbrauchen eines Vorrats des Reinigungsmittels zu erwarten ist, falls das Prüfen ergibt, dass ein Aufbrauchen eines Vorrats des Reinigungsmittels zu erwarten ist. Beispielsweise kann ein Hinweis an einer Datenverarbeitungsanlage, beispielsweise einem Mobilgerät, des Benutzers erfolgen. Alternativ ist ebenfalls denkbar, dass der Hinweis an einer Reinigungsvorrichtung (beispielsweise an einem Anzeigeelement der Reinigungsvorrichtung), die das Reinigungsmittel verwendet, erfolgt. Beispielsweise umfasst der Hinweis ein optisches, akustisches und/oder haptisches Signal für den Benutzer. Der Verbraucher kann hierdurch informiert werden, dass ein Aufbrauchen eines Vorrats des Reinigungsmittels zu erwarten ist. Der Benutzer kann in diesem Fall manuell ein Bestellen eines Vorrats des Reinigungsmittels durchführen.

Gemäß einer bevorzugten Ausgestaltung des Verfahrens gemäß dem ersten Aspekt umfasst das Verfahren weiterhin ein Ermitteln und/oder Bereitstellen der Quantitätsinformation repräsentativ für eine Menge des Reinigungsmittels des Vorrats oder einer Information, aus der die Quantitätsinformation ableitbar ist.

Das Ermitteln umfasst beispielsweise eine Detektion der Quantitätsinformation durch eine Sensoreinrichtung. Beispielsweise umfasst das Ermitteln ein Berechnen der Quantitätsinformation. Die ermittelte Quantitätsinformation kann beispielsweise durch die Sensoreinrichtung bereitgestellt werden. Beispielsweise wird die Quantitätsinformation durch eine Kommunikationsschnittstelle der Sensoreinrichtung bereitgestellt. Beispielsweise ist die Kommunikationsschnittstelle für eine drahtgebundene oder drahtlose Kommunikation eingerichtet. Beispielsweise ist die Kommunikationsschnittstelle eine Netzwerkschnittstelle. Die Kommunikationsschnittstelle ist bevorzugt dazu eingerichtet, mit einem Kommunikationssystem zu kommunizieren. Beispiele für ein Kommunikationssystem sind ein lokales Netzwerk (LAN), ein großräumiges Netzwerk (WAN), ein drahtloses Netzwerk (beispielsweise gemäß dem IEEE-802.11-Standard, dem Bluetooth (LE)-Standard und/oder dem NFC-Standard), ein drahtgebundenes Netzwerk, ein Mobilfunknetzwerk, ein Telefonnetzwerk und/oder das Internet.

Gemäß einer bevorzugten Ausgestaltung des Verfahrens gemäß dem ersten Aspekt erfolgt das Ermitteln und/oder Bereitstellen der Quantitätsinformation repräsentativ für eine Menge des Reinigungsmittels des Vorrats durch eine Sensoreinrichtung eines Vorratsbehälters.

Der Vorratsbehälter kann den Vorrat des Reinigungsmittels aufweisen. Wie bereits ausgeführt kann der Vorratsbehälter als Kiste, Karton, Kartonage, Beutel, Tüte, Flasche oder Kartusche ausgebildet sein.

Eine Sensoreinrichtung kann beispielsweise einen oder mehrere Sensoren umfassen. Beispielsweise umfasst die Sensoreinrichtung einen optischen Sensor, einen Leitfähigkeitssensor und/oder einen laufzeit-auswertenden Sensor. Ein optischer Sensor umfasst beispielsweise eine Photodiode und optional eine Leuchtdiode. Beispielsweise kann mittels eines optischen Sensors der (Innen-)Raum des Vorratsbehälters vermessen werden. Ein Leitfähigkeitssensor umfasst beispielsweise zwei (oder mehr) Elektroden. Diese sind so angeordnet, dass sie mit dem Reinigungsmittel in dem Vorratsbehälter in Kontakt kommen. Ein laufzeit-auswertender Sensor umfasst beispielsweise einen Sender und einen Empfänger. Beispielsweise ist der laufzeitauswertende Sensor ein optischer Sensor, ein auf Ultraschall basierter Sensor oder ein auf Radar basierter Sensor. Beispielsweise wird von dem Sender ein Puls ausgesandt. Die Pulslaufzeit ist die Zeit, die der Puls braucht, um zum Empfänger reflektiert zu werden. Durch Messen dieser Laufzeit kann man über die Geschwindigkeit eine Distanz ermitteln. Somit kann die Laufzeit als Maß für den Füllstand dienen.

Die Sensoreinrichtung kann auch Teil einer Dosierhilfe, welche einem Vorratsbehälter zugeordnet sein kann, sein.

Bevorzugt ist aber gemäß einer Ausgestaltung des Verfahrens gemäß dem ersten Aspekt die Sensoreinrichtung in den den Vorrat aufweisenden Vorratsbehälter integriert.

Gemäß einer bevorzugten Ausgestaltung des Verfahrens gemäß dem ersten Aspekt erfolgt das Ermitteln und/oder das Bereitstellen der Quantitätsinformation repräsentativ für eine Menge des Reinigungsmittels des Vorrats abhängig oder unabhängig von einer Nutzung des Reinigungsmittels des Vorrats.

Durch ein von einer Nutzung des Reinigungsmittels unabhängiges Ermitteln und/oder Bereitstellen kann das Ermitteln bzw. Bereitstellen vorbestimmt werden und so beispielsweise ein zu häufiges oder zu seltenes Ermitteln bzw. Bereitstellen vermieden werden.

Erfolgt hingegen das Ermitteln und/oder das Bereitstellen der Quantitätsinformation abhängig von einer Nutzung des Reinigungsmittels des Vorrats, kann beispielsweise der Energieverbrauch einer Sensorvorrichtung optimiert werden. Beispielsweise sind ein Ruhezustand (welcher sich beispielsweise durch einen geringeren Energieverbrauch auszeichnen kann) und ein Aktivitätsmodus für eine Sensoreinrichtung oder einen Teil hiervon vorgesehen. Bei Benutzung des entsprechenden Vorratsbehälters wechselt die Sensoreinrichtung vom Ruhezustand in den Aktivitätsmodus. Es kann dann ein Ermitteln und vorzugsweise auch ein Bereitstellen der Quantitätsinformation erfolgen. Anschließend kann wieder in den Ruhezustand gewechselt werden.

Insbesondere werden einzelne Verfahrensschritte (beispielsweise das Erhalten einer Information, das Prüfen eines bevorstehenden Aufbrauchens und/oder das Bestimmen eines Verbrauchsprofils), welche beispielswiese nicht unbedingt mit der Sensoreinrichtung durchgeführt werden müssen, von einer weiteren Vorrichtung vorgenommen werden, welche insbesondere über ein Kommunikationssystem mit der Vorrichtung, welche die Sensoreinrichtung aufweist, in Verbindung steht. Eine solche weitere Vorrichtung kann beispielswiese ein Server sein und beispielsweise ein Teil bzw. eine Komponente einer sogenannten Computer Cloud sein, welche Datenverarbeitungsressourcen dynamisch für verschiedene Nutzer in einem Kommunikationssystem bereitstellt. Unter einer Computer Cloud wird insbesondere eine Datenverarbeitungs-Infrastruktur gemäß der Definition des "National Institute for Standards and Technology" (NIST) für den englischen Begriff "Cloud Computing" verstanden. Ein Beispiel einer Computer Cloud ist eine Microsoft Windows Azure Platform.

Gemäß dem ersten Aspekt der Erfindung wird auch eine Vorrichtung beschrieben, welche dazu eingerichtet ist oder entsprechende Mittel umfasst, ein Verfahren gemäß dem ersten Aspekt durchzuführen und/oder zu steuern.

Gemäß dem ersten Aspekt der Erfindung wird auch eine Vorrichtung beschrieben, umfassend zumindest einen Prozessor und zumindest einen Speicher mit Computerprogrammcode, wobei der zumindest eine Speicher und der Computerprogrammcode dazu eingerichtet sind, mit dem zumindest einen Prozessor zumindest ein Verfahren gemäß dem ersten Aspekt auszuführen und/oder zu steuern. Unter einem Prozessor soll zum Beispiel eine Kontrolleinheit, ein Mikroprozessor, eine Mikrokontrolleinheit wie ein Mikrocontroller, ein digitaler Signalprozessor (DSP), eine anwendungsspezifische Integrierte Schaltung (ASIC) oder ein Field Programmable Gate Arrays (FPGA) verstanden werden.

Zum Beispiel umfasst eine beispielhafte Vorrichtung ferner Mittel zum Speichern von Informationen wie einen Programmspeicher und/oder einen Hauptspeicher. Zum Beispiel umfasst eine beispielhafte erfindungsgemäße Vorrichtung ferner jeweils Mittel zum Empfangen und/oder Senden von Informationen über ein Netzwerk wie eine Netzwerkschnittstelle. Zum Beispiel sind beispielhafte erfindungsgemäße Vorrichtungen über ein oder mehrere Netzwerke miteinander verbunden und/oder verbindbar.

Eine beispielhafte Vorrichtung gemäß dem ersten Aspekt ist oder umfasst etwa eine Datenverarbeitungsanlage, die softwaremäßig und/oder hardwaremäßig eingerichtet ist, um die jeweiligen Schritte eines beispielhaften Verfahrens gemäß dem ersten Aspekt ausführen zu können. Beispiele für eine Datenverarbeitungsanlage sind ein Computer, ein Desktop-Computer, ein Server, ein Thinclient und/oder ein tragbarer Computer (Mobilgerät), wie etwa ein Laptop-Computer, ein Tablet-Computer, ein Wearable, ein persönlicher digitaler Assistent oder ein Smartphone.

Gemäß dem ersten Aspekt der Erfindung wird auch ein Computerprogramm beschrieben, das Programmanweisungen umfasst, die einen Prozessor zur Ausführung und/oder Steuerung eines Verfahrens gemäß dem ersten Aspekt veranlassen, wenn das Computerprogramm auf dem Prozessor läuft. Ein beispielhaftes Programm gemäß der Erfindung kann in oder auf einem computerlesbaren Speichermedium gespeichert sein, welches eines oder mehrere Programme enthält.

Die zuvor in dieser Beschreibung beschriebenen beispielhaften Ausgestaltungen der vorliegenden Erfindung sollen auch in allen Kombinationen miteinander offenbart verstanden werden. Insbesondere sollen beispielhafte Ausgestaltungen in Bezug auf die unterschiedlichen Aspekten offenbart verstanden werden.

Weitere vorteilhafte beispielhafte Ausgestaltungen der Erfindung sind der folgenden detaillierten Beschreibung einiger beispielhafter Ausführungsformen der vorliegenden Erfindung, insbesondere in Verbindung mit den Figuren, zu entnehmen. Die Figuren sollen jedoch nur dem Zwecke der Verdeutlichung, nicht aber zur Bestimmung des Schutzbereiches der Erfindung dienen. Die Figuren sind nicht maßstabsgetreu und sollen lediglich das allgemeine Konzept der vorliegenden Erfindung beispielhaft widerspiegeln. Insbesondere sollen Merkmale, die in den Figuren enthalten sind, keineswegs als notwendiger Bestandteil der vorliegenden Erfindung erachtet werden.

### Kurze Beschreibung der Figuren

In der Zeichnung zeigt
- Fig. 1: ein beispielhaftes System gemäß dem zweiten Aspekt umfassend beispielhafte Vorrichtungen gemäß dem ersten Aspekt;
- Fig. 2: ein Blockdiagramm einer beispielhaften Vorrichtung gemäß der unterschiedlichen Aspekte;
- Fig. 3: ein Ablaufdiagramm eines beispielhaften Verfahrens gemäß dem ersten Aspekt;
- Fig. 4a,b: eine schematische Darstellung von Quantitätsinformationen; und
- Fig. 5: unterschiedliche Ausführungsbeispiele eines Speichermediums.

### Detaillierte Beschreibung einiger beispielhafter Ausführungsformen der Erfindung

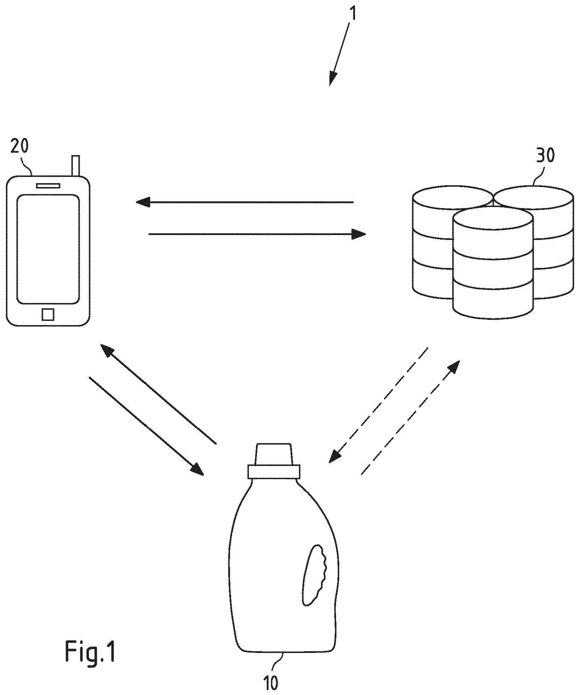

Fig. 1 zeigt zunächst ein beispielhaftes System 1 gemäß dem zweiten Aspekt umfassend beispielhafte Vorrichtungen 10, 20, 30, welche jeweils eine Vorrichtung gemäß dem ersten Aspekt sein können.

Das System 1 umfasst einen beispielhaft dargestellten Vorratsbehälter 10, welcher einen Vorrat eines Reinigungsmittels aufweist. Der Vorratsbehälter 10 ist hier als eine Kunststoffflasche ausgebildet. Es können jedoch auch andere Vorratsbehälter vorgesehen sein. Weiterhin umfasst das System 1 ein Mobilgerät 20 in Form eines Smartphones. Schließlich umfasst das System 1 einen Server 30, welcher insbesondere räumlich entfernt sein kann.

Der Vorratsbehälter 10 umfasst eine Sensorvorrichtung (nicht dargestellt), welche dazu eingerichtet ist, den Füllstand des Reinigungsmittels in dem Vorratsbehälter 10 zu ermitteln und somit eine Quantitätsinformation repräsentativ für die Menge des Reinigungsmittels des Vorrats (oder eine Information, aus der die Quantitätsinformation ableitbar ist) zu ermitteln.

Weiterhin weist der Vorratsbehälter 10 eine Kommunikationsschnittstelle auf. Auf diese Weise kann die Quantitätsinformation weiteren Vorrichtungen bereitgestellt werden. Insbesondere kann die Quantitätsinformation an das Mobilgerät 20 gesendet werden.

Das Mobilgerät 20 weist ebenfalls eine Kommunikationsschnittstelle auf, um die Quantitätsinformation des Vorratsbehälters 10 zu erhalten.

Grundsätzlich können die von dem Mobilgerät 20 erhaltenen oder ermittelten Informationen an den Server 30 übertragen werden. Ebenfalls kann das Mobilgerät 20 Informationen von Server 30 erhalten. Alternativ oder zusätzlich ist denkbar, dass der Vorratsbehälter 10 nicht mit dem Mobilgerät 20, sondern direkt mit dem Server 30 kommuniziert.

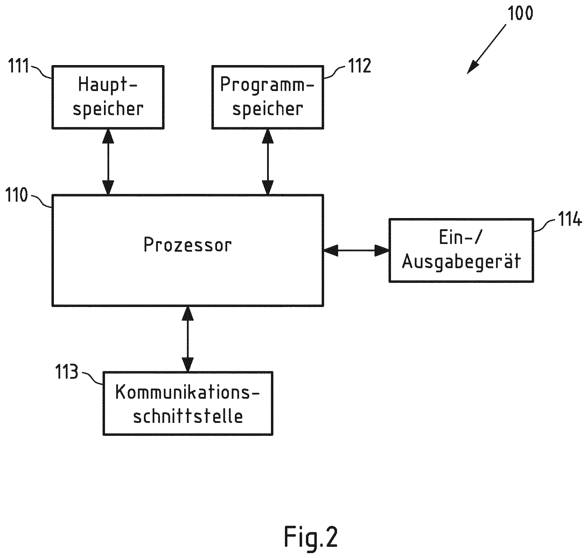

Fig. 2 zeigt ein Blockdiagramm eines Ausführungsbeispiels einer Vorrichtung 100, welche insbesondere ein beispielhaftes Verfahren gemäß dem ersten Aspekt ausführen kann. Die Vorrichtung 100 ist beispielsweise eine Vorrichtung gemäß dem ersten oder zweiten Aspekt. Die Vorrichtung 100 ist beispielhaft für die Vorrichtungen 20 und/oder 30 der Fig. 1 (oder einen Teil hiervon). Ebenfalls wäre denkbar, dass der Vorratsbehälter 10 eine Sensoreinrichtung umfasst, welche einzelne oder alle der Komponenten der Fig. 2 aufweist.

Die Vorrichtung 100 kann insofern beispielsweise ein Computer, ein Desktop-Computer, ein Server, ein Thinclient oder ein tragbarer Computer (Mobilgerät), wie etwa ein Laptop-Computer, ein Tablet-Computer, ein persönlicher digitaler Assistent (PDA) oder ein Smartphone sein. Die Vorrichtung kann beispielsweise die Funktion eines Servers oder eines Clients erfüllen.

Prozessor 110 der Vorrichtung 100 ist insbesondere als Mikroprozessor, Mikrokontrolleinheit, Mikrocontroller, digitaler Signalprozessor (DSP), Anwendungsspezifische Integrierte Schaltung (ASIC) oder Field Programmable Gate Array (FPGA) ausgebildet.

Prozessor 110 führt Programmanweisungen aus, die in Programmspeicher 112 gespeichert sind, und speichert beispielsweise Zwischenergebnisse oder ähnliches in Arbeits- oder Hauptspeicher 111. Zum Beispiel ist Programmspeicher 112 ein nicht-flüchtiger Speicher wie ein Flash-Speicher, ein Magnetspeicher, ein EEPROM-Speicher (elektrisch löschbarer programmierbarer Nur-LeseSpeicher) und/oder ein optischer Speicher. Hauptspeicher 111 ist zum Beispiel ein flüchtiger oder nicht-flüchtiger Speicher, insbesondere ein Speicher mit wahlfreiem-Zugriff (RAM) wie ein statischer RAM-Speicher (SRAM), ein dynamischer RAM-Speicher (DRAM), ein ferroelektrischer RAM-Speicher (FeRAM) und/oder ein magnetischer RAM-Speicher (MRAM).

Programmspeicher 112 ist vorzugsweise ein lokaler mit der Vorrichtung 100 fest verbundener Datenträger. Mit der Vorrichtung 100 fest verbundene Datenträger sind beispielsweise Festplatten, die in die Vorrichtung 1 eingebaut sind. Alternativ kann der Datenträger beispielsweise auch ein mit der Vorrichtung 100 trennbar verbindbarer Datenträger sein wie ein Speicher-Stick, ein Wechseldatenträger, eine tragbare Festplatte, eine CD, eine DVD und/oder eine Diskette.

Programmspeicher 112 enthält beispielsweise das Betriebssystem von der Vorrichtung 100, das beim Starten der Vorrichtung 100 zumindest teilweise in Hauptspeicher 111 geladen und vom Prozessor 110 ausgeführt wird. Insbesondere wird beim Starten von Vorrichtung 100 zumindest ein Teil des Kerns des Betriebssystems in den Hauptspeicher 111 geladen und von Prozessor 110 ausgeführt. Das Betriebssystem von Vorrichtung 100 ist beispielsweise ein Windows -, UNIX-, Linux-, Android-, Apple iOS- und/oder MAC-Betriebssystem.

Das Betriebssystem ermöglicht insbesondere die Verwendung der Vorrichtung 100 zur Datenverarbeitung. Es verwaltet beispielsweise Betriebsmittel wie Hauptspeicher 111 und Programmspeicher 112, Netzwerkschnittstelle 113, Ein- und Ausgabegerät 114, stellt unter anderem durch Programmierschnittstellen anderen Programmen grundlegende Funktionen zur Verfügung und steuert die Ausführung von Programmen.

Prozessor 110 steuert die Kommunikationsschnittstelle 113, welche beispielsweise eine Netzwerkschnittstelle sein kann und als Netzwerkkarte, Netzwerkmodul und/oder Modem ausgebildet sein kann. Die Kommunikationsschnittstelle 113 ist insbesondere dazu eingerichtet, eine Verbindung der Vorrichtung 100 mit anderen Vorrichtungen, insbesondere über ein (drahtloses) Kommunikationssystem, beispielsweise ein Netzwerk, herzustellen und mit diesen zu kommunizieren. Die Kommunikationsschnittstelle 113 kann beispielsweise Daten (über das Kommunikationssystem) empfangen und an Prozessor 110 weiterleiten und/oder Daten von Prozessor 110 empfangen und (über das Kommunikationssystem) senden. Beispiele für ein Kommunikationssystem sind ein lokales Netzwerk (LAN), ein großräumiges Netzwerk (WAN), ein drahtloses Netzwerk (beispielsweise gemäß dem IEEE-802.11-Standard, dem Bluetooth (LE)-Standard und/oder dem NFC-Standard), ein drahtgebundenes Netzwerk, ein Mobilfunknetzwerk, ein Telefonnetzwerk und/oder das Internet.

Des Weiteren kann Prozessor 110 zumindest ein Ein-/Ausgabegerät 114 steuern. Ein-/Ausgabegerät 114 ist beispielsweise eine Tastatur, eine Maus, eine Anzeigeeinheit, ein Mikrofon, eine berührungsempfindliche Anzeigeeinheit, ein Lautsprecher, ein Lesegerät, ein Laufwerk und/oder eine Kamera. Ein-/Ausgabegerät 114 kann beispielsweise Eingaben eines Benutzers aufnehmen und an Prozessor 110 weiterleiten und/oder Informationen für den Benutzer von Prozessor 110 empfangen und ausgeben.

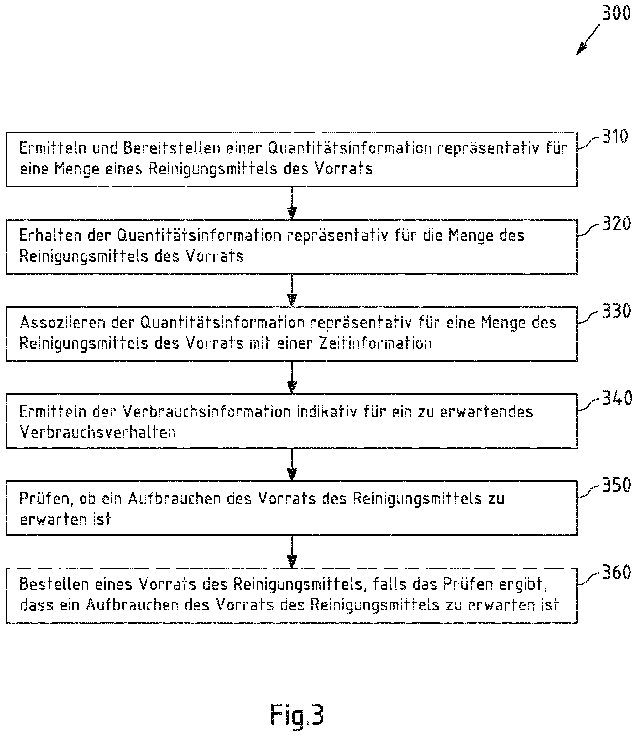

Fig. 3 zeigt nun ein Ablaufdiagramm 300 eines beispielhaften Verfahrens gemäß dem ersten Aspekt. Zunächst erfolgt ein Ermitteln einer Quantitätsinformation repräsentativ für eine Menge des Reinigungsmittels des Vorrats in dem Vorratsbehälter 10 (Aktion 310). Hierzu weist der Vorratsbehälter 10 eine integrierte Sensoreinrichtung auf, welche den Füllstand des Reinigungsmittels in dem Vorratsbehälter 10 detektieren kann. Die Quantitätsinformation wird von der Sensoreinrichtung des Vorratsbehälters 10 über eine Kommunikationsschnittstelle dem Mobilgerät 20 bereitgestellt (Aktion 310). Dies erfolgt beispielsweise im Anschluss an eine Nutzung des Reinigungsmittels in dem Vorratsbehälter 10.

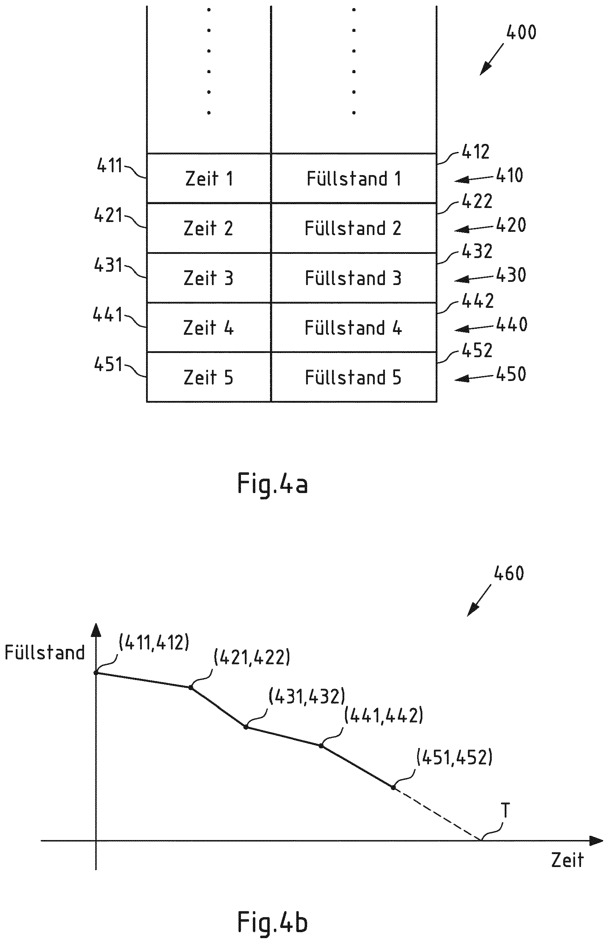

Die Quantitätsinformation kann daraufhin von dem Mobilgerät 20 empfangen werden (Aktion 320) und bei Bedarf an den Server 30 weitergeleitet werden. Auf dem Mobilgerät 20 (und/oder dem Server 30) ist eine Datenbank 400 mit Datensätzen 410, 420, 430, 440, 450, wie sie beispielhaft in Fig. 4a dargestellt ist, vorhanden. Jeder Datensatz der Datenbank 400 enthält eine Quantitätsinformation repräsentativ für einen absoluten Füllstand 412, 422, 432, 442, 452. Durch ein Assoziieren der jeweiligen Quantitätsinformation mit einer Zeitinformation (Aktion 330) weist jeder Datensatz zudem einen digitalen Zeitstempel 411, 421, 431, 441, 451 auf. Das Assoziieren mit der Zeitinformation kann dabei bereits durch die Sensoreinrichtung des Vorratsbehälters 10 als auch später erfolgen, beispielsweise durch das Mobilgerät 20 oder den Server 30.

Beispielsweise kann der Datensatz 450 der aktuelle Datensatz mit dem aktuellen Füllstand sein, während die Datensätze 410, 420, 430, 440 durch eine bisherige Nutzungen des Reinigungsmittels durch den Benutzer erhalten wurden.

Die Datensätze 410, 420, 430, 440 sind ein Beispiel für eine Verbrauchsinformation. Allerdings kann eine Verbrauchsinformation auch auf Basis beispielsweise der Datensätze 410, 420, 430, 440 ermittelt werden (Aktion 340).

Fig. 4b zeigt zudem eine graphische Darstellung des zeitlichen Verlaufs 460 des Reinigungsmittelverbrauchs auf Basis der Information der Datensätze 410, 420, 430, 440, 450, wobei der Füllstand über der Zeit aufgetragen wurde. Durch eine Extrapolation (beispielsweise mittels einer Regression) kann ein Zeitpunkt T prognostiziert werden, zu dem der Vorrat aufgebraucht sein wird.

Anschließend erfolgt ein Prüfen, ob ein Aufbrauchen des Vorrats des Reinigungsmittels zu erwarten ist (Aktion 350). Dies kann beispielsweise der Fall sein, wenn der Zeitpunkt T weniger oder nicht mehr als ein vordefinierter Zeitraum entfernt liegt.

Für den Fall, dass das Prüfen ergibt, dass ein Aufbrauchen des Vorrats des Reinigungsmittels zu erwarten ist (Aktion 350), erfolgt ein Bestellen eines Vorrats des Reinigungsmittels (Aktion 360).

Die Schritte 320, 330, 340, 350 und 360 können dabei ausschließlich durch das Mobilgerät 20, ausschließlich durch den Server 30 oder gemeinsam durch das Mobilgerät 20 und den Server 30 erfolgen.

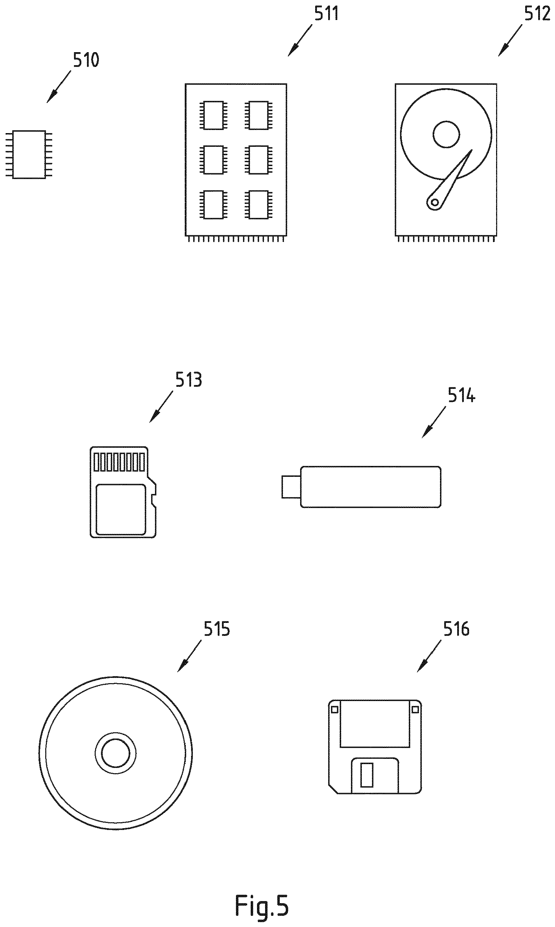

Fig.5 zeigt schließlich unterschiedliche Ausführungsbeispiele von Speichermedien, auf denen ein Ausführungsbeispiel eines erfindungsgemäßen Computerprogrammes gespeichert sein kann. Das Speichermedium kann beispielsweise ein magnetisches, elektrisches, optisches und/oder andersartiges Speichermedium sein. Das Speichermedium kann beispielsweise Teil eines Prozessors (z.B. des Prozessor 110 der Fig. 2) sein, beispielsweise ein (nicht-flüchtiger oder flüchtiger) Programmspeicher des Prozessors oder ein Teil davon (wie Programmspeicher 112 in Fig. 2). Ausführungsbeispiele eines Speichermediums sind ein Flash-Speicher 510, eine SSD-Festplatte 511, eine magnetische Festplatte 512, eine Speicherkarte 513, ein Memory Stick 514 (z.B. ein USB-Stick), eine CD-ROM oder DVD 515 oder eine Diskette 516.

Die in dieser Spezifikation beschriebenen Ausführungsbeispiele der vorliegenden Erfindung und die diesbezüglich jeweils angeführten optionalen Merkmale und Eigenschaften sollen auch in allen Kombinationen miteinander offenbart verstanden werden. Insbesondere soll auch die Beschreibung eines von einem Ausführungsbeispiel umfassten Merkmals - sofern nicht explizit gegenteilig erklärt - vorliegend nicht so verstanden werden, dass das Merkmal für die Funktion des Ausführungsbeispiels unerlässlich oder wesentlich ist. Die Abfolge der in dieser Spezifikation geschilderten Verfahrensschritte in den einzelnen Ablaufdiagrammen ist nicht zwingend, alternative Abfolgen der Verfahrensschritte sind denkbar. Die Verfahrensschritte können auf verschiedene Art und Weise implementiert werden, so ist eine Implementierung in Software (durch Programmanweisungen), Hardware oder eine Kombination von beidem zur Implementierung der Verfahrensschritte denkbar.

In den Patentansprüchen verwendete Begriffe wie "umfassen", "aufweisen", "beinhalten", "enthalten" und dergleichen schließen weitere Elemente oder Schritte nicht aus. Unter die Formulierung "zumindest teilweise" fallen sowohl der Fall "teilweise" als auch der Fall "vollständig". Die Formulierung "und/oder" soll dahingehend verstanden werden, dass sowohl die Alternative als auch die Kombination offenbart sein soll, also "A und/oder B" bedeutet "(A) oder (B) oder (A und B)". Die Verwendung des unbestimmten Artikels schließt eine Mehrzahl nicht aus. Eine einzelne Vorrichtung kann die Funktionen mehrerer in den Patentansprüchen genannten Einheiten bzw. Vorrichtungen ausführen. In den Patentansprüchen angegebene Bezugszeichen sind nicht als Beschränkungen der eingesetzten Mittel und Schritte anzusehen.

## Patentansprüche

1. Verfahren, durchgeführt von zumindest einer Vorrichtung, das Verfahren umfassend:
- Prüfen (350), ob ein Aufbrauchen eines Vorrats eines Reinigungsmittels zu erwarten ist,
wobei das Prüfen zumindest teilweise auf einer Quantitätsinformation (452) repräsentativ für eine Menge des Reinigungsmittels des Vorrats eines Benutzers und auf einer Verbrauchsinformation indikativ für ein zu erwartendes Verbrauchsverhalten des Benutzers in Bezug auf das Reinigungsmittel basiert, wobei die Verbrauchsinformation angibt, welche Menge des Reinigungsmittels in welchem Zeitraum verbraucht wird zumindest teilweise basierend auf einen bisherigen zeitlichen Verlauf eines Verbrauchs des Reinigungsmittels und wobei die Quantitätsinformation eine Information repräsentativ für eine entnommene Menge des Reinigungsmittels aus dem Vorrat ist;
- Bestellen (360) oder Auslösen eines Bestellens eines Vorrats des Reinigungsmittels, falls das Prüfen ergibt, dass ein Aufbrauchen eines Vorrats des Reinigungsmittels zu erwarten ist.

2. Verfahren nach einem der Ansprüche 1, wobei die Quantitätsinformation (452) repräsentativ für einen relativen oder absoluten Füllstand (452) des Reinigungsmittels des Vorrats ist.

3. Verfahren nach einem der Ansprüche 1 oder 2, das Verfahren weiterhin umfassend:
- Assoziieren (330) der Quantitätsinformation (452) repräsentativ für eine Menge des Reinigungsmittels des Vorrats mit einer Zeitinformation (451) repräsentativ für eine Zeit, zu der der Vorrat die Menge des Reinigungsmittels aufweist.

4. Verfahren nach einem der Ansprüche 1 bis 3, das Verfahren weiterhin umfassend:
- Ermitteln (340) der Verbrauchsinformation indikativ für ein zu erwartendes Verbrauchsverhalten.

5. Verfahren nach Anspruch 4, wobei das Ermitteln der Verbrauchsinformation indikativ für ein zu erwartendes Verbrauchsverhalten zumindest teilweise auf einer oder mehreren erhaltenen Quantitätsinformationen (412, 422, 432, 442) jeweils repräsentativ für eine Menge des Reinigungsmittels des Vorrats basiert.

6. Verfahren nach einem der Ansprüche 1 bis 5, wobei die Verbrauchsinformation zumindest teilweise eine bisherige Dosiermenge und/oder eine bisherige Nutzungsfrequenz des Reinigungsmittels berücksichtigt.

7. Verfahren nach einem der Ansprüche 1 bis 6, das Verfahren weiterhin umfassend:
- Ausgeben oder Auslösen eines Ausgebens eines Hinweises an einen Benutzer, dass ein Aufbrauchen eines Vorrats des Reinigungsmittels zu erwarten ist, falls das Prüfen ergibt, dass ein Aufbrauchen eines Vorrats des Reinigungsmittels zu erwarten ist.

8. Verfahren nach Anspruch 7, wobei das Ermitteln und/oder Bereitstellen der Quantitätsinformation (452) repräsentativ für eine Menge des Reinigungsmittels des Vorrats durch eine Sensoreinrichtung eines Vorratsbehälters (10) erfolgt.

9. Verfahren nach Anspruch 8, wobei die Sensoreinrichtung in die den Vorrat aufweisenden Vorratsbehälter (10) integriert ist.

10. Verfahren nach einem der Ansprüche 8 bis 9, wobei das Ermitteln und/oder das Bereitstellen der Quantitätsinformation (452) repräsentativ für eine Menge des Reinigungsmittels des Vorrats abhängig oder unabhängig von einer Nutzung des Reinigungsmittels des Vorrats erfolgt.

11. Vorrichtung, welche dazu eingerichtet ist ein Verfahren nach einem der Ansprüche 1 bis 10 durchzuführen und/oder zu steuern, wobei die Vorrichtung zumindest einen Prozessor und zumindest einen Speicher mit Computerprogrammcode aufweist.

12. Computerprogrammprodukt, das Programmanweisungen umfasst, die einen Prozessor (110) zur Ausführung und/oder Steuerung eines Verfahrens nach einem der Ansprüche 1 bis 10 veranlassen, wenn das Computerprogramm auf dem Prozessor (110) läuft.

## Claims

1. A method, carried out by at least one apparatus, the method comprising:
- checking (350) whether a supply of a cleaning agent is likely to be used up,
wherein the check is based, at least in part, on quantity information (452) which is representative of an amount of the cleaning agent in a user's supply and on consumption information which is indicative of the user's likely consumption behavior with respect to the cleaning agent, wherein the consumption information specifies what amount of the cleaning agent is consumed in what time period, at least in part, on the basis of a previous time curve of consumption of the cleaning agent, and wherein the quantity information is information which is representative of an amount of the cleaning agent removed from the supply;
- ordering (360) or triggering ordering of a supply of the cleaning agent if the result of the check is that a supply of the cleaning agent is likely to be used up.

2. The method according to one of claims 1, wherein the quantity information (452) is representative of a relative or absolute fill level (452) of the cleaning agent in the supply.

3. The method according to one of claims 1 or 2, the method further comprising:
- associating (330) the quantity information (452) which is representative of an amount of the cleaning agent in the supply with time information (451) which is representative of a time at which the supply comprises the amount of the cleaning agent.

4. The method according to one of claims 1 to 3, the method further comprising:
- determining (340) the consumption information which is indicative of likely consumption behavior.

5. The method according to claim 4, wherein the consumption information which is indicative of likely consumption behavior is determined, at least in part, on the basis of one or more obtained pieces of quantity information (412, 422, 432, 442) that are each representative of an amount of the cleaning agent in the supply.

6. The method according to one of claims 1 to 5, wherein the consumption information takes into account, at least in part, a previous metered amount and/or a previous frequency of use of the cleaning agent.

7. The method according to one of claims 1 to 6, the method further comprising:
- outputting or triggering output of an indication to a user that a supply of the cleaning agent is likely to be used up if the result of the check is that a supply of the cleaning agent is likely to be used up.

8. The method according to claim 7, wherein the quantity information (452) which is representative of an amount of the cleaning agent in the supply is determined and/or provided by means of a sensor device of a storage container (10).

9. The method according to claim 8, wherein the sensor device is integrated in the storage container (10) which comprises the supply.

10. The method according to one of claims 8 to 9, wherein the quantity information (452) which is representative of an amount of the cleaning agent in the supply is determined and/or provided depending on or independently of a use of the cleaning agent in the supply.

11. An apparatus which is designed to carry out and/or control a method according to one of claims 1 to 10, wherein the apparatus has at least one processor and at least one memory comprising computer program code.

12. A computer program product comprising program instructions that prompt a processor (110) to execute and/or control a method according to one of claims 1 to 10 when the computer program runs on the processor (110).

## Revendications

1. Procédé mis en œuvre par au moins un dispositif, le procédé comprenant :
- la vérification (350) du fait de savoir si un épuisement de la réserve d'un agent de nettoyage est à prévoir,
la vérification étant basée au moins en partie sur des informations de quantité (452) représentant une quantité d'agent de nettoyage de la réserve d'un utilisateur et sur des informations de consommation indiquant un comportement de consommation de l'utilisateur en ce qui concerne l'agent de nettoyage, les informations de consommation indiquant quelle quantité d'agent de nettoyage est consommée dans quelle période de temps sur la base au moins en partie d'un historique antérieur de consommation de l'agent de nettoyage, et les informations de quantité étant des informations représentant une quantité d'agent de nettoyage qui a été retirée de la réserve ;
- la commande (360) ou le déclenchement d'une commande d'une réserve de l'agent de nettoyage si la vérification indique qu'un épuisement d'une réserve de l'agent de nettoyage est à prévoir.

2. Procédé selon la revendication 1, dans lequel les informations de quantité (452) représentent un niveau de remplissage relatif ou absolu (452) de l'agent de nettoyage dans la réserve.

3. Procédé selon l'une des revendications 1 ou 2, le procédé comprenant en outre :
- l'association (330) des informations de quantité (452) représentant une quantité d'agent de nettoyage de la réserve avec des informations temporelles (451) représentant un moment auquel la réserve présente la quantité d'agent de nettoyage.

4. Procédé selon l'une des revendications 1 à 3, le procédé comprenant en outre :
- la détermination (340) des informations de consommation indiquant un comportement de consommation à prévoir.

5. Procédé selon la revendication 4, dans lequel la détermination des informations de consommation indiquant un comportement de consommation à prévoir est basée au moins en partie sur une ou plusieurs informations de quantité (412, 422, 432, 442) obtenues, chacune représentant une quantité d'agent de nettoyage dans la réserve.

6. Procédé selon l'une des revendications 1 à 5, dans lequel les informations de consommation tiennent compte au moins en partie d'une quantité de dosage antérieure et/ou d'une fréquence d'utilisation antérieure de l'agent de nettoyage.

7. Procédé selon l'une des revendications 1 à 6, le procédé comprenant en outre :
- la sortie ou le déclenchement d'une sortie d'une indication à un utilisateur, selon laquelle/lequel un épuisement d'une réserve de l'agent de nettoyage est à prévoir si la vérification indique qu'un épuisement d'une réserve de l'agent de nettoyage est à prévoir.

8. Procédé selon la revendication 7, dans lequel la détermination et/ou la fourniture des informations de quantité (452) représentant une quantité d'agent de nettoyage de la réserve est effectuée par un appareil capteur d'un récipient de stockage (10).

9. Procédé selon la revendication 8, dans lequel l'appareil capteur est intégré dans le récipient de stockage (10) présentant la réserve.

10. Procédé selon l'une des revendications 8 à 9, dans lequel la détermination et/ou la fourniture des informations de quantité (452) représentant une quantité d'agent de nettoyage de la réserve s'effectuent en fonction ou indépendamment de l'utilisation de l'agent de nettoyage de la réserve.

11. Dispositif configuré pour mettre en oeuvre et/ou commander un procédé selon l'une des revendications 1 à 10, le dispositif présentant au moins un processeur et au moins une mémoire comportant un code de programme informatique.

12. Produit programme informatique comprenant des instructions de programme qui amènent un processeur (110) à mettre en oeuvre et/ou à commander un procédé selon l'une des revendications 1 à 10 si le programme informatique est exécuté sur le processeur (110).
